# EUROPÄISCHE PATENTSCHRIFT

(11) **EP 3 990 156 B1**
(45) Veröffentlichungstag und Bekanntmachung des Hinweises auf die Patenterteilung: **24.07.2024**
(21) Anmeldenummer: 20713159.0
(22) Anmeldetag: 11.02.2020
(51) Int. Cl.: B01D 61/02, B01D 61/04, B01D 61/08, B03D 1/14, C02F 1/00, C02F 1/44, C02F 1/24

(54) **VORRICHTUNG UND VERFAHREN ZUR AUFBEREITUNG VON ZU REINIGENDEM WASSER, NÄMLICH SÜSSWASSER, SALZWASSER ODER BRACKWASSER, INSBESONDERE ZUR ENTSALZUNG VON ZU REINIGENDEM WASSER**
DEVICE AND METHOD FOR TREATING WATER THAT IS TO BE CLEANED, NAMELY FRESH WATER, SALT WATER OR BRACKISH WATER, IN PARTICULAR FOR DESALINATION OF WATER THAT IS TO BE CLEANED
DISPOSITIF ET PROCÉDÉ POUR LE TRAITEMENT D'EAU À PURIFIER, À SAVOIR D'EAU DOUCE, D'EAU SALÉE OU D'EAU SAUMÂTRE, EN PARTICULIER POUR LE DESSALEMENT D'EAU À PURIFIER

(30) Priorität: 26.06.2019 DE 102019004501; 23.07.2019 DE 102019005088; 09.09.2019 DE 102019006361
(43) Veröffentlichungstag der Anmeldung: 04.05.2022
(73) Patentinhaber: STIRN, Wilhelm Michael, 74074 Heilbronn (DE)
(72) Erfinder: STIRN, Wilhelm Michael, 74074 Heilbronn (DE)
(74) Vertreter: Patentanwälte Schuster, Müller & Partner mbB
(86) Internationale Anmeldenummer: PCT/DE2020/100091
(87) Internationale Veröffentlichungsnummer: WO 2020/259733

(56) Entgegenhaltungen:
- US-A- 3 456 802
- US-A- 6 139 750
- US-A1- 2007 181 496
- US-A1- 2012 175 303
- US-A1- 2015 307 374
- US-A1- 2017 209 834

## Beschreibung

### Stand der Technik

Die Erfindung geht aus von einer Vorrichtung zur Aufbereitung von zu reinigendem Wasser, nämlich Süßwasser, Salzwasser oder Brackwasser, insbesondere zur Entsalzung von zu reinigendem Wasser, nach der Gattung des Anspruchs 1, und einem Verfahren zur Aufbereitung von zu reinigendem Wasser, nämlich Süßwasser, Salzwasser oder Brackwasser, insbesondere zur Entsalzung von zu reinigendem Wasser, nach der Gattung des Anspruchs 9.

Zur Aufbereitung von zu reinigendem Wasser werden Filter eingesetzt, da es erforderlich ist, dass das zu reinigende Wasser insbesondere von groben Partikeln, Schweb- und Geschmacksstoffen, Kalk, Mineralien, Pestiziden, Nitrat befreit wird. Sofern durch die Aufbereitung des zu reinigenden Wassers, das Süßwasser, Salzwasser oder Brackwasser sein kann, Trinkwasser entstehen soll, sind die Anforderungen an die Trinkwasserqualität sehr hoch. Ein weltweit steigender Wasserverbrauch führt zu einer Wasserknappheit, wodurch sauberes Trinkwasser rar und damit zu einem überaus kostbaren Gut wird. Da Wasser mehr als zwei Drittel der Erdoberfläche bedeckt, gibt es seit einiger Zeit Bestrebungen, aus Meerwasser (Salzwasser) Trinkwasser zu gewinnen. Hierzu ist es zwingend erforderlich, das Meerwasser zu entsalzen. Zum Stand der Technik gehören bereits Meerwasserentsalzungsverfahren zur Gewinnung von Trinkwasser. Nachteilig ist hierbei, dass diese sehr energieaufwändig sind, weil hierzu entweder sehr hohe Temperaturen benötigt werden oder aber elektrischer Strom, wenn das Verfahren auf Elektrolyse setzt.

Eine andere Möglichkeit der Trinkwassergewinnung ist die Umkehrosmosemeerwasserentsalzung.

Bei der Umkehrosmose wird das zu reinigende Wasser (Süßwasser, Salzwasser oder Brackwasser) zur Überwindung des osmotischen Druckes unter hohem Druck durch eine semipermeable Membran mit einem Porendurchmesser von 0,5 bis 5 nm gepresst. Diese wirkt wie ein Filter und lässt nur bestimmte Ionen und Moleküle durch. Somit erhält man eine Auftrennung der ursprünglichen Lösung. Durch den Membranfilter lassen sich insbesondere Salze, Bakterien, Viren, ein Überangebot an Kalk und Gifte wie Schwermetalle zurückhalten. Der osmotische Druck steigt mit zunehmender Salzkonzentration, wodurch der Prozess irgendwann zum Stehen kommen würde. Daher wird bei der Umkehrosmosemeerwasserentsalzung mit Hochdruck das zu reinigende Wasser, nämlich z.B. das Meerwasser, durch eine Osmosemembran, die semipermeable Membran, die nur das Reinstwasser, welches dann Süßwasser bzw. Trinkwasser passieren lässt, gepresst. Der hierzu benötigte Druck ist sehr hoch und bewegt sich im Bereich von über 50 bar bei derzeit vorhandenen Vorrichtungen bzw. Osmosemembranen. Er kann sogar 80 bis 100 bar betragen. Um diesen Druck z.B. für die Umkehrosmosemeerwasserentsalzung zu erzeugen, müssen strombetriebene Pumpen das Meerwasser den ganzen Tag durch die Umkehrosmosemembran durchdrücken. Nachteilig ist hierbei der hohe Energieverbrauch. Daher wird in dem Gebrauchsmuster DE 20 2018 001 627 U1 vorgeschlagen, dass zur Erzeugung des erforderlichen Drucks ein hohes Betonsilo, insbesondere bis zu 100 m hohe Silos, welches mit dem zu reinigenden Wasser befüllt wird, eingesetzt wird. Die Idee dahinter ist, dass zusätzlich zu dem normalen atmosphärischen Druck (Luftdruck), der ca. 1 bar beträgt, eine Tiefenänderung im Wasser von 10 m eine Druckänderung von 1 bar bewirkt. Daher herrscht am Grund des 100 m hohen und mit Wasser gefüllten Silos ein Umgebungsdruck, der sich aus der Summe von Luftdruck und Wasserdruck ergibt, von 11 bar. Trinkwasser hat einen osmotischen Druck von weniger als ca. 2 bar, der angewendete Druck für die Umkehrosmose von Trinkwasser beträgt je nach verwendeter Membran und Anlagenkonfiguration ca. 3 bis 30 bar. Für die Meerwasserentsalzung ist ein Druck von ca. 50 bis 80 bar erforderlich, da Meerwasser mit ca. 30 bar einen wesentlich höheren osmotischen Druck aufweist als Trinkwasser. Nachteilig ist daher, dass der noch zusätzlich erforderliche Druck bei der Meerwasserentsalzung weiterhin durch energieverbrauchende Pumpen erzeugt werden muss. Zusätzlich wird Energie benötigt, um das Meerwasser in die 100 m hohen Betonsilos zu pumpen.

Daher werden in der Offenlegungsschrift DE 10 2012 213 214 A1 eine Vorrichtung sowie ein Verfahren zur Wasserentsalzung vorgeschlagen, wobei Osmosemembranen verwendet werden, wodurch einfach und effizient sowie zuverlässig Wasser entsalzt werden bzw. Trinkwasser gewonnen werden kann, da eine Osmosemembran in einigen hundert Meter Wassertiefe versenkt ist, vorzugsweise mindestens 500 m oder 800 m, und auf der Eingangsseite der Osmosemembran der Wasserdruck anliegt und auf der anderen Seite der Osmosemembran ein abgeschlossenes Volumen angeordnet ist, wobei hinter der Osmosemembran im Wesentlichen atmosphärischer Druck herrscht, und das entsalzte Wasser (Reinstwasser) durch eine Wasserleitung mittels mit von Arbeitstieren (z.B. Esel, Pferde, Kamele) angetriebenen Pumpen an die Wasseroberfläche bzw. an Land gepumpt wird. Um zu vermeiden, dass die Osmosemembran innerhalb kürzester Zeit verstopft, ist es erforderlich, dass jeder Osmoseeinheit eine Filtereinheit vorangestellt wird, die das zu reinigende Wasser (z.B. Meerwasser) filtert, wodurch gefiltertes Wasser entsteht, das durch die Osmosemembran gedrückt werden kann. Nachteilig ist, dass eine Filtereinheit im Laufe der Zeit verstopft. Auflandig würde dies kein nennenswertes Problem darstellen, da die Filter bzw. die Filtereinheit jederzeit und mit geringem Aufwand gewechselt und wieder gereinigt werden kann. Unter Wasser stellt sich die Situation auf gänzlich andere Weise dar. Hier bedeutet es einen immensen Aufwand, die Anlage an die Oberfläche zu hieven, die Filter bzw. die Filtereinheit zu tauschen und die Anlage wieder in Gang zu setzen.

Aus der US 2017/0209834 A1 ist eine Umkehrosmoseeinheit und eine vorgeschaltete Filtereinheit bekannt, die so gesteuert werden können, dass die Filtereinheit durch Umkehr der Strömungsrichtung in der Filtereinheit mit Wasser aus der Umkehrosmoseeinheit freigespült werden kann. Dabei muss der Prozess der Wasserreinigung unterbrochen werden.

Auch die US 2007/0181496 A1 offenbart eine Umkehrosmoseeinheit bei der eine Freispülung der vorgelagerten Mikrofiltrationsmodule mittels aufgereinigter Saline möglich ist, wobei für diesen Prozess die eigentliche Umkehrosmose unterbrochen werden muss.

Aus den Druckschriften US 6 139 750 A, US 2015/307374 A1 und US 3 456 802 A sind Umkehrosmoseanlagen bekannt, welche unterschiedliche Vorfiltersysteme offenbaren, wobei in all diesen lediglich eine Strömungsrichtung vorgesehen ist.

Aufgabe der Erfindung ist es daher eine Vorrichtung zur Aufbereitung von zu reinigendem Wasser, nämlich Süßwasser, Salzwasser oder Brackwasser, insbesondere zur Entsalzung von zu reinigendem Wasser, und ein Verfahren zur Aufbereitung von zu reinigendem Wasser, nämlich Süßwasser, Salzwasser oder Brackwasser, insbesondere zur Entsalzung von zu reinigendem Wasser, bereitzustellen, durch die die Nachteile des Standes der Technik überwunden werden.

### Die Erfindung und ihre Vorteile

Die erfindungsgemäße Vorrichtung zur Aufbereitung von zu reinigendem Wasser, nämlich Süßwasser, Salzwasser oder Brackwasser, insbesondere zur Entsalzung von zu reinigendem Wasser, mit den Merkmalen des Anspruchs 1 und das erfindungsgemäße Verfahren zur Aufbereitung von zu reinigendem Wasser, nämlich Süßwasser, Salzwasser oder Brackwasser, insbesondere zur Entsalzung von zu reinigendem Wasser, mit den Merkmalen des Anspruchs 9, haben demgegenüber den Vorteil, dass zur Erzeugung von gefiltertem Wasser oder Reinstwasser (z.B. Trinkwasser) mindestens zwei Filtereinheiten und eine Umkehrosmoseeinheit eingesetzt werden, wobei die Umkehrosmoseeinheit mittig zwischen den zwei Filtereinheiten platziert ist, und die Filtereinheiten spiegelbildlich an beiden Seiten der Umkehrosmoseeinheit angebracht sind, wobei eine erste Filtereinheit die zur Erzeugung von gefiltertem Wasser dient, in Strömungsrichtung von dem zu reinigenden Waser oder von einem anderen Filter gefilterten Wasser durchströmt wird, wobei das gefilterte Wasser mittels der Umkehrosmoseeinheit in aufkonzentriertes Wasser und Reinstwasser auftrennbar ist, wobei die spiegelbildlich angeordnete zweite Filtereinheit, die in Strömungsrichtung nach der Umkehrosmoseeinheit angeordnet ist, rückwärts von dem aufkonzentrierten Wasser durchströmt wird, und die Strömungsrichtung in der Umkehrosmoseeinheit und in den Filtereinheiten umgekehrt werden kann, so dass die zweite Filtereinheit durch Filterung des zu reinigenden Wassers beladen wird und die erste Filtereinheit frei gespült wird, wodurch die Standzeit der Filtereinheiten verlängert werden kann.

Die erfindungsgemäße Vorrichtung kann an Land, an der Wasseroberfläche und/oder unter Wasser eingesetzt werden. Bei der Verwendung einer Filtereinheit, bei der die Strömungsrichtung umkehrbar ist, wird eine Verstopfung der Filtereinheit zuverlässig durch eine zumindest teilweise Reinigung der Filtereinheit verhindert, da zur zumindest teilweisen Reinigung der Filtereinheit, durch die die Filtereinheit mittels Flüssigkeit, insbesondere mittels zu reinigendem Wasser, vorgefiltertem Wasser, Reinstwasser und/oder aufkonzentriertem Wasser, freigespült wird, die Strömungsrichtung innerhalb der Filtereinheit umgekehrt wird. Somit ist eine Reinigung der Filtereinheit auch unter Wasser möglich.

Der Aufbau einer erfindungsgemäßen Anlage zur Meerwasserentsalzung, insbesondere einer erfindungsgemäßen Anlage zur Meerwasserentsalzung, soll bevorzugt modular gegliedert sein. Dadurch kann die Kapazität der Anlage im Wesentlichen über die Zahl gleichartiger Module (Einheiten) dimensioniert werden und kostengünstig nur die nötigen Filtermodule (z.B. UV-Licht) finanziert werden müssen. Im Folgenden sollen die wesentlichen Baugruppen eines Moduls beschrieben werden.

Nach einer vorteilhaften Ausgestaltung der erfindungsgemäßen Vorrichtung weist die mindestens eine Umkehrosmoseeinheit mindestens eine Osmosemembran auf, wobei das durch die Filtereinheit gefilterte Wasser mittels mindestens einer Pumpe mit hohem Druck durch die Osmosemembran bzw. die Osmosemembranen hindurchgedrückt und/oder hindurchgesogen wird, so dass das gefilterte Wasser in Reinstwasser und aufkonzentriertes Wasser auftrennbar ist. Herzstück kann die Umkehrosmoseeinheit sein. Sie besteht aus walzenförmig oder stapelförmig angeordneten Membranfolien, die an der Außenseite mit zu reinigenden Wasser (Frischwasser) bzw. mit bereits angereicherter Sole angeströmt werden. Auf der Innenseite tritt das abgeschiedene Reinstwasser (Süßwasser) aus und wird der weiteren Verwendung zugeführt, beispielsweise zum Verbraucher an die Wasseroberfläche. Den notwendigen Druck an der Außenseite der Osmosemembran liefert der hydrostatische Umgebungsdruck in einer Wassertiefe von 550 bis 800 Metern. Sollte keine ausreichende Wassertiefe zur Verfügung stehen, kann der herrschende hydrostatische Umgebungsdruck mit Hilfe einer Zusatzpumpe auf die benötigten 55 bis 80 bar erhöht werden. In jedem dieser Module befindet sich eine Niederdruckpumpe, die für die turbulente Überströmung der Folienoberflächen sorgt. Zwei Ventile, die eine gezielte Steuerung der Durchflussmenge erlauben, steuern den Zufluss an gereinigtem Frischwasser (Reinstwasser) und den Abfluss an angereicherter Sole (aufkonzentriertes Wasser). Das abgeschiedene Frischwasser ist strömungstechnisch nicht mit dem Osmosekreislauf verbunden und benötigt daher keine Mengensteuerung.

Nach einer zusätzlichen vorteilhaften Ausgestaltung der erfindungsgemäßen Vorrichtung ist die für die zumindest teilweise Reinigung der Filtereinheit verwendete Flüssigkeit zusätzlich zu dem aufkonzentrierten Wasser noch zu reinigendes Wasser, gefiltertes Wasser und/oder Reinstwasser.

Nach einer zusätzlichen vorteilhaften Ausgestaltung der erfindungsgemäßen Vorrichtung wird die spiegelbildlich angeordnete zweite Filtereinheit, die in Strömungsrichtung nach der Umkehrosmoseeinheit angeordnet ist, rückwärts zusätzlich zu dem aufkonzentrierten Wasser mit zu reinigendem Wasser, gefiltertem Wasser und/oder Reinstwasser durchströmt.

Nach einer zusätzlichen vorteilhaften Ausgestaltung der erfindungsgemäßen Vorrichtung ist die mindestens eine Osmosemembran von einem Drucktank umgeben.

Nach einer zusätzlichen vorteilhaften Ausgestaltung der erfindungsgemäßen Vorrichtung weist die mindestens eine Umkehrosmoseeinheit mindestens eine Osmosemembran aufweist und weist zur Erzeugung einer turbulenten Strömung an der Osmosemembran mindestens eine Umkehrosmoseeinheit eine Pumpe (z.B. Niederdruckpumpe) auf.

Bei konstanter Kanalbreite erfordert geringe Zähigkeit höhere Fließgeschwindigkeit und bei konstanter Fließgeschwindigkeit erfordert geringere Zähigkeit eine geringere Spaltbreite um eine turbulente Strömung sicherzustellen. Die Raynolds-Zahl selbst wird empirisch für verschiedene Strömungsgeometrien bestimmt und lässt eine Beurteilung für das Vorhandensein einer turbulenten Strömung zu. Der Kern der Patentidee ist daher: Die Osmosemembran wird entweder walzenförmig durch lange Bahnen oder stapelförmig über runde Membranplatten aufgebaut. Den Druck an der Außenseite der Membranen liefert der hydrostatische Umgebungsdruck in der Meerestiefe. Eine Pumpe (Niederdruckpumpe) sorgt für eine Kreisströmung mit so hoher Strömungsgeschwindigkeit, dass zwischen benachbarten Membranoberflächen sicher turbulente Strömung herrscht. Nachdem die Sole bis auf ca. 10% Salzgehalt angereichert werden kann, kann ca. die Hälfte des Frischwassers als Süßwasser abgeschieden werden. Bei der oben abgeschätzten Abscheiderate bei einem Durchlauf in Höhe von ca. 1,25% erfordert die ca. 30 bis 50 Überströmvorgänge. Dies bedeutet, dass das gesamte Frischwasser ca. 30 bis 50 Mal an der Membranoberfläche vorbeiströmen muss, um den gewünschten Anreicherungsgrad der Sole auf ca. 10% zu erreichen.

Nach einer zusätzlichen vorteilhaften Ausgestaltung der erfindungsgemäßen Vorrichtung weist die mindestens eine Umkehrosmoseeinheit mindestens eine Osmosemembran auf und liegt an mindestens einer Osmosemembran zu reinigendes Wasser und/oder durch mindestens einen Filter gefiltertes Wasser mit einem Druck von mehr als 50 bar, insbesondere mehr als 80 bar, an.

Nach einer diesbezüglichen vorteilhaften Ausgestaltung der erfindungsgemäßen Vorrichtung liegt das zu reinigende Wasser und/oder durch mindestens einen Filter gefiltertes Wasser mittels einer Pumpe (z.B. Hochdruckpumpe) mit dem erforderlichen Druck an. Dabei setzt sich der Druck aus hydrostatischem Umgebungsdruck plus zusätzlichem Pumpendruck zusammen. Dies ermöglicht, die erfindungsgemäße Ausgestaltung auch in jeder beliebigen Wassertiefe zu realisieren. Die Grenzen werden dabei durch auflandigen Betrieb mit einem Pumpendruck von bis zu 80 bar und einem unterseeischen Betrieb bei z.B. 800 m Wassertiefe von theoretisch 0 bar gesetzt.

Nach einer zusätzlichen vorteilhaften Ausgestaltung der erfindungsgemäßen Vorrichtung bestehen ein Filter und/oder eine Filtereinheit anordnungsbedingt aus einem Grob- und/oder einem Feinfilter und/oder einem Absolutfilter und/oder einem Aktivkohlefilter. Jede Osmoseeinheit muss mit vorgefilterten Wasser (sehr reinem Frischwasser, gereinigtem, salzhaltigem Meerwasser) versorgt werden. Deshalb wird bevorzugt jeder Osmoseeinheit eine Filtereinheit vorangestellt. Dieses besteht im Wesentlichen aus einem Grobfilter zum Abhalten grober Verunreinigungen, einem Feinfilter zum Abhalten von Verunreinigungen bis zu einem Durchmesser von ca. 50 Mikrometer und einem Absolutfilter mit einer Porengröße von ca. 0,2 Mikrometer.

Nach einer vorteilhaften Ausgestaltung des erfindungsgemäßen Verfahrens zur Aufbereitung von zu reinigendem Wasser, nämlich Süßwasser, Salzwasser oder Brackwasser, insbesondere zur Entsalzung von zu reinigendem Wasser, mit mindestens zwei Filtereinheiten und einer Umkehrosmoseeinheit, wobei die Umkehrosmoseeinheit mittig zwischen den zwei Filtereinheiten platziert ist, und die Filtereinheiten spiegelbildlich an beiden Seiten er Umkehrosmoseeinheit angebracht sind, wobei eine erste Filtereinheit, die zur Erzeugung von gefiltertem Wasser dient, in Strömungsrichtung von dem zu reinigenden Wasser oder von einem anderen Filter gefilterten Wasser durchströmt wird, wobei das gefilterte Wasser mittels der Umkehrosmoseeinheit in aufkonzentriertes Wasser und Reinstwasser auftrennbar ist, wobei die spiegelbildlich angeordnete zweite Filtereinheit, die in Strömungsrichtung nach der Umkehrosmoseeinheit angeordnet ist, rückwärts von dem aufkonzentrierten Wasser durchströmt wird, und die Strömungsrichtung in der Umkehrosmoseeinheit und in den Filtereinheiten umgekehrt wird, so dass die zweite Filtereinheit durch Filterung des zu reinigenden Wassers beladen wird und die erste Filtereinheit frei gespült wird und mindestens eine Umkehrosmoseeinheit mindestens eine Osmosemembran aufweist, wobei das durch die Filtereinheit gefilterte Wasser mittels mindestens einer Pumpe mit hohem Druck durch die Osmosemembran bzw. die Osmosemembranen hindurchgedrückt und/oder hindurchgesogen wird, so dass das gefilterte Wasser in Reinstwasser und aufkonzentriertes Wasser aufgetrennt wird.

Nach einer zusätzlichen vorteilhaften Ausgestaltung des erfindungsgemäßen Verfahrens wird die spiegelbildlich angeordnete zweite Filtereinheit, die in Strömungsrichtung nach der Umkehrosmoseeinheit angeordnet ist, rückwärts zusätzlich zu dem aufkonzentrierten Wasser noch mit zu reinigendem Wasser, gefiltertem Wasser und/oder Reinstwasser durchströmt.

Nach einer zusätzlichen vorteilhaften Ausgestaltung des erfindungsgemäßen Verfahrens weist die mindestens eine Umkehrosmoseeinheit mindestens eine Osmosemembran auf und wird mittels einer Pumpe (z.B. Niederdruckpumpe) eine turbulente Strömung an der Osmosemembran mindestens einer Umkehrosmoseeinheit erzeugt.

Nach einer zusätzlichen vorteilhaften Ausgestaltung des erfindungsgemäßen Verfahrens weist die mindestens eine Umkehrosmoseeinheit mindestens eine Osmosemembran auf und wird an einer Osmosemembran das zu reinigende Wasser und/oder durch einen anderen Filter gefilterten Wasser mit einem Druck von mehr als 50 bar, insbesondere mehr als 80 bar, angelegt.

Nach einer diesbezüglichen vorteilhaften Ausgestaltung des erfindungsgemäßen Verfahrens wird das zu reinigende Wasser und/oder durch einen anderen Filter gefilterten Wasser mittels einer Pumpe (z.B. Hochdruckpumpe) mit dem erforderlichen Druck angelegt oder weist die mindestens eine Umkehrosmoseeinheit mindestens eine Osmosemembran auf und wird die Osmosemembran derart tief im Wasser bzw. im Meer angeordnet, dass der dort vorhandene Wasserdruck zum Hindurchtreten ausreicht.

Nach einer zusätzlichen vorteilhaften Ausgestaltung des erfindungsgemäßen Verfahrens werden ein Filter und/oder eine Filtereinheit eingesetzt, die aus mindestens einem Grob-, mindestens einem Feinfilter, mindestens einem Absolutfilter und/oder mindestens einem Aktivkohlefilter bestehen. Denkbar ist, dass mindestens ein Filter und/oder mindestens eine Filtereinheit vor und/oder nach einem Gasperlenfiltrationstank angeordnet wird.

Weitere Vorteile und vorteilhafte Ausgestaltungen der Erfindung sind der nachfolgenden Beschreibung, den Ansprüchen und der Zeichnung entnehmbar.

### Zeichnungen

Bevorzugte Ausführungsbeispiele des erfindungsgemäßen Gegenstands sind in den Zeichnungen dargestellt und werden im Folgenden näher erläutert. Es zeigen
- Fig. 1: eine skizzenhafter prinzipieller Aufbau einer Umkehrosmoseeinheit,
- Fig. 2: eine skizzenhafte Filtereinheit,
- Fig. 3: eine skizzenhafte Darstellung der Überströmung in der Umkehrosmoseeinheit.

### Beschreibung der Ausführungsbeispiele

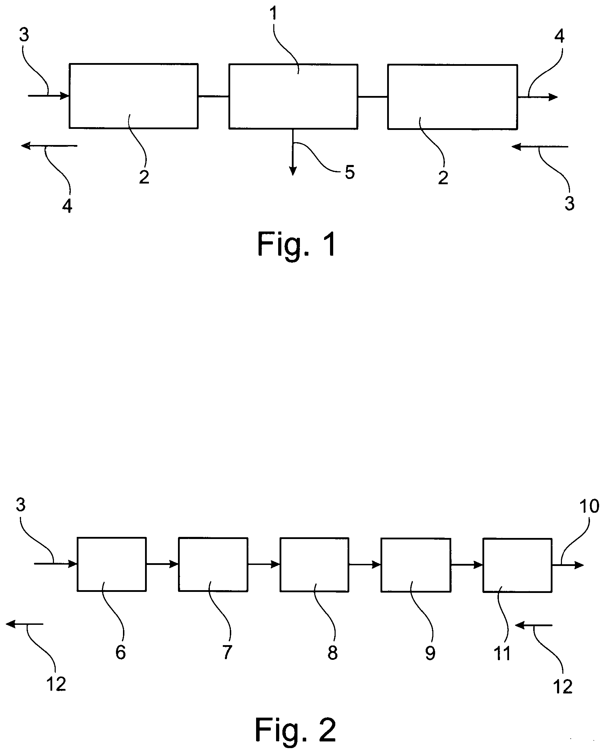

Fig.1 zeigt eine skizzenhafter prinzipieller Aufbau einer Umkehrosmoseeinheit 1, die bevorzugt unter Wasser eingesetzt werden kann, wobei Fig. 1 auf Funktionsblöcke reduziert ist, die im Folgenden detaillierter beschrieben werden. Die Umkehrosmoseeinheit 1, auf die bei der Aufbereitung von Süßwasser möglicherweise verzichtet werden kann, ist mittig zwischen zwei Filtereinheiten 2 (Filtermodule) platziert, die spiegelbildlich an beiden Seiten der Umkehrosmoseeinheit 1 angeflanscht sind.

Eine Filtereinheit 2 wird in Strömungsrichtung von dem zu reinigenden Wasser 3 (Salzwasser, Süßwasser, Brackwasser) oder bereits von einem anderen Filter gefilterten (vorgereinigten) Wasser durchströmt und dient zur Erzeugung von gefilterten Wasser, welches mittels mindestens einer Pumpe (z.B. Hochdruckpumpe) mit hohem Druck durch die Osmosemembran bzw. die Osmosemembranen hindurchgedrückt und/oder hindurchgesogen wird, so dass das gefilterten Wasser in aufkonzentriertes Wasser 4 und Reinstwasser 5 auftrennbar ist. In dieser Strömungsrichtung reinigt die angeströmte Filtereinheit 2 somit bevorzugt in mehreren Stufen das zu reinigende Wasser 3 oder das bereits von einem anderen Filter gefilterte (vorgereinigte) Wasser bis zu einem Reinheitsgrad, der Umkehrosmose ermöglicht. Die spiegelbildlich angeordnete Filtereinheit 2, die in Strömungsrichtung nach der Umkehrosmoseeinheit 1 angeordnet ist, wird von zu reinigendem Wasser 3, gefiltertem Wasser, Reinstwasser 5 und/oder aufkonzentriertem Wasser 4 rückwärts, also bevorzugt von dem feinsten zum gröbsten Filter einer Filtereinheit 2, durchströmt und dadurch gereinigt. Die Strömungsumkehr bewirkt also in dieser Anordnung, dass eine Filtereinheit 2 durch Filterung des zu reinigenden Wassers 3 beladen und eine Filtereinheit 2 frei gespült wird. Dadurch sollte die Filterstandzeit zwischen zwei Wartungsintervallen wesentlich gesteigert werden im Vergleich zum Betrieb mit einer einzigen Filtereinheit 2. Die geometrische Anordnung oder die Kapazität der drei Einheiten in einem funktionsfähigen Gerät ist durch die Prinzipskizze nicht festgelegt. Die Kapazität einer Anlage wurde durch den Parallelbetrieb gleichartiger Module bestimmt.

Der symmetrische Aufbau der Filtereinheiten 2 ist somit eine Alternative zum Stand der Technik, da dadurch die Strömungsrichtung in der Umkehrosmoseeinheit 1 umgekehrt werden kann. Somit ist es möglich, an beiden Enden der Umkehrosmoseeinheit 1 symmetrisch eine Filtereinheit 2 anzuflanschen. Beim Betrieb wird dann eine Filtereinheit 2 das Meerwasser reinigen und gereinigt an die Umkehrosmoseeinheit 1 zuführen. Die symmetrisch dazu angeordnete Filtereinheit 2 wird rückwärts z.B. von der angereicherten Sole aus der Umkehrosmoseeinheit 1 durchströmt und spült die Filter wieder frei. Dadurch sollte sich die Standzeit der Filtereinheiten 2 drastisch erhöhen.

Das Vertauschen der Bezugszahl 3 und 4 deutet die Strömungsumkehr an.

Fig. 2 zeigt eine skizzenhafte Filtereinheit 2. Die Filtereinheit 2 setzt sich in Strömungsrichtung bevorzugt aus mindestens drei Filtermodulen zusammen. Der Grobfilter 6 könnte beispielsweise ein Sandfilter (z.B. Sedimentfilter) sein, der makroskopische Verunreinigungen oder grobe Partikel aus dem zu reinigenden Wasser 3 entfernt. Das zweite Modul, der Feinfilter 7, entfernt Partikel mit Durchmessern bis etwa 50 Mikrometer. Der Absolutfilter 8 schließlich besteht aus inerten Glaskugeln aus z.B. Rubin und/oder Quarz mit einem bestimmten Durchmesser (z.B. 127 µm) und kann Schmutzpartikel bis zu einem Durchmesser von ca. 0,2 Mikrometer zuverlässig ausfiltern.

Das durch die Filtermodule gefilterte Wasser 10 wird mittels einer Pumpe 11 mit variablen Druck zur Angleichung des hydrostatischen Umgebungsdrucks an den notwendigen Druck zur Umkehrosmoseeinheit gepumpt, um dort die Osmosemembran zu umströmen.

Durch Umkehr der Strömungsrichtung innerhalb der Filtermodule in Strömungsrichtung 12 können die mit ausgefiltertem Material beladenen Filtermodule durch Freispülung gereinigt werden.

Bevorzugt könnte eine Osmosemembran auf Graphen, also Kohlenstofflagen, die, obwohl sie nur ein Atom dick sind, extrem hart sind und hervorragende Leitfähigkeiten aufweisen, basieren. Zur kostengünstigen und einfachen Herstellung der Osmosemembran könnte dabei Graphenoxid, ein chemisches Derivat, welches durch Oxidation herstellbar ist, Verwendung finden. Dabei wird Graphenoxid z.B. als Lösung auf ein Substrat oder poröses Material aufgetragen, wodurch eine dünne Membran entsteht. Die harte Schicht aus Graphen weist Löcher auf, die so klein sind (Porendurchmesser z.B. 1 Nanometer), dass nur Wasser aber kein Salz hindurchpasst. Um ein Aufquellen der aus Graphenoxid bestehenden Membran durch den Kontakt mit Wasser zu vermeiden, wodurch kleinere Salze durch die Poren hindurchtreten könnten, ist es denkbar, dass hauchdünne Wände aus z.B. Epoxidharz auf beide Seiten der Membran platziert werden, die das Aufquellen verhindern.

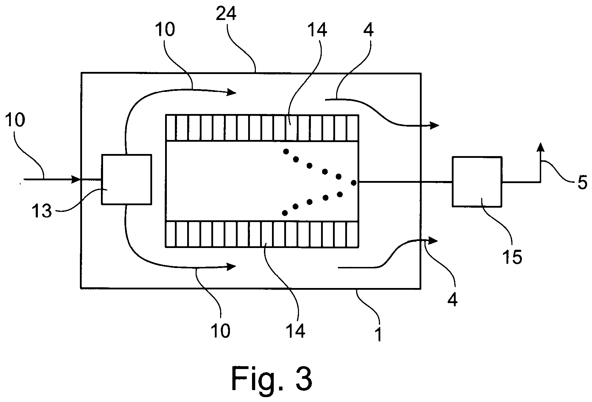

Fig. 3 zeigt eine skizzenhafte Darstellung der Überströmung in der Umkehrosmoseeinheit 1. Die Umkehrosmose findet an Membranen statt, deren Außenseite dem gefilterten Wasser 10 ausgesetzt ist. Die Innenseite ist dagegen im Prinzip fast hermetisch abgeschirmt. Aber nur fast, da Außen- und Innenseite durch feinste Kanäle verbunden sind, die zwar Wassermoleküle passieren lassen aber z.B. Salzionen zurückhalten.

Dieses Diffundieren der Wassermoleküle von der Außenseite zur Innenseite erfordert einen erheblichen Druckunterschied im Bereich von 55 bis 80 bar. Der Umkehrosmoseprozess kann nur stattfinden, wenn die Außenseite der Membran turbulent angeströmt wird. Anderenfalls setzen sich die Poren, die die Umkehrosmose ermöglichen, augenblicklich zu. Da die Abscheiderate an Reinstwasser 5 (Süßwasser) im Verbleich zum überströmenden Massenstrom gering ausfällt, wird noch zusätzlich eine Niederdruck-Umwälzpumpe 13 (Niederdruckpumpe) eingesetzt, die zur turbulenten Überströmen der äußeren Oberfläche der Umkehrosmosemembran 6 dient. Der Massenstrom, der die Umkehrosmosemembran 14 überströmt, macht ein Vielfaches, abgeschätzt wird ein Faktor von 30 bis 50, des zugeführten, gereinigten Reinstwassers 5 aus. Das abgeschiedene Reinstwasser 5 (Süßwasser) wird über eine Hochdruckpumpe 15 (Druckbedarf bis 80 bar) abgezogen und an die Oberfläche gepumpt. Das aufkonzentrierte Wasser 4 verlässt die Umkehrosmoseeinheit 1 und wird an die Umgebung z.B. das Meer abgegeben.

Die Osmosemembran 14 der Umkehrosmoseeinheit 1 ist von einem Drucktank umgeben, in dessen Inneren bedingt durch den Wasserdruck, der den Drucktank umgibt, oder die Pumpe 11 bevorzugt ein Druck von 80 bar herrscht. Ist die Wassertiefe ausreichend, so ist die Pumpe 11 nicht notwendig. Somit wird die Pumpe 11 eingesetzt, wenn der Wasserdruck keine 80 bar aufweist, um die fehlende Differenz auszugleichen. Zwingend erforderlich ist die Pumpe 11, wenn der Drucktank an Land oder auf dem Wasser betrieben werden soll. Das aufkonzentrierte Wasser 4 verlässt die Umkehrosmoseeinheit 1 durch ein Ventil (Überdruckventil), das beispielsweise ab einem Druck von 77 bar öffnet. Das Reinstwasser 5 hat beim Verlassen der Umkehrosmoseeinheit 1 sehr niedrigen Druck, der ggfls. 0 bar beträgt. Zur Steuerung des Frischwasserabflusses aus der Umkehrosmoseeinheit 1 wird bevorzugt die elektrische Leitfähigkeit des Reinstwassers 5 herangezogen, da die elektrische Leitfähigkeit ein Indikator der Reinheit des Wassers ist, so dass eine niedrige elektrische Leitfähigkeit einen hohen Reinheitsgrad und eine höhere elektrische Leitfähigkeit einen niedrigeren Reinheitsgrad signalisiert.

Je nach Verschmutzungsgrad und Salzgehalt des zu reinigenden Wassers kann ggfls. auf Umkehrosmoseeinheit 1, die an Land, auf dem Wasser oder unter Wasser betrieben werden kann, verzichtet werden, so dass durch die Aufbereitung mittels Gasperlenfiltration und/oder unter Einsatz der Filtereinheit 2, die ggfls. auch ein UV-Licht-Modul und/oder ein Mikroplastikmodul und/oder eine Zentrifuge zur Reinigung des Wassers aufweisen kann, bereits Reinstwasser 5 zur Verfügung gestellt werden kann.

### Bezugszahlenliste

- 1: Umkehrosmoseeinheit
- 2: Filtereinheit
- 3: Zu reinigendes Wasser
- 4: Aufkonzentriertes Wasser
- 5: Reinstwasser
- 6: Grobfilter
- 7: Feinfilter
- 8: Absolutfilter
- 9: Schichtenfilter
- 10: Gefiltertes Wasser
- 11: Pumpe
- 12: Strömungsrichtung
- 13: Niederdruckpumpe
- 14: Osmosemembran, Umkehrosmosemembran
- 15: Hochdruckpumpe

## Patentansprüche

1. Vorrichtung zur Aufbereitung von zu reinigendem Wasser (3), nämlich Süßwasser, Salzwasser oder Brackwasser, insbesondere zur Entsalzung von zu reinigendem Wasser (3), mit mindestens zwei Filtereinheiten (2) und einer Umkehrosmoseeinheit (1), wobei die Umkehrosmoseeinheit (1) mittig zwischen den zwei Filtereinheiten (2) platziert ist, und die Filtereinheiten spiegelbildlich an beiden Seiten der Umkehrosmoseeinheit (1) angeflanscht sind, wobei eine erste Filtereinheit (2) die zur Erzeugung von gefiltertem Wasser (10) dient, in Strömungsrichtung von dem zu reinigenden Waser (3) oder von einem anderen Filter gefilterten Wasser (10) durchströmt wird, wobei das gefilterte Wasser mittels der Umkehrosmoseeinheit (1) in aufkonzentriertes Wasser (4) und Reinstwasser (5) auftrennbar ist,
**dadurch gekennzeichnet,**
**dass** die spiegelbildlich angeordnete zweite Filtereinheit (2), die in Strömungsrichtung nach der Umkehrosmoseeinheit (1) angeordnet ist, rückwärts von dem aufkonzentrierten Wasser (4) durchströmt wird und die Strömungsrichtung in der Umkehrosmoseeinheit (1) und in den Filtereinheiten (2) umgekehrt werden kann, so dass die zweite Filtereinheit (2') durch Filterung des zu reinigenden Wassers (3) beladen wird und die erste Filtereinheit (2) frei gespült wird.

2. Vorrichtung, nach Anspruch 1,
**dadurch gekennzeichnet,**
**dass** die mindestens eine Umkehrosmoseeinheit (1) mindestens eine Osmosemembran (14) aufweist, wobei das durch die Filtereinheit (2) gefilterte Wasser (10) mittels mindestens einer Pumpe (11) mit hohem Druck durch die Osmosemembran (14) bzw. die Osmosemembranen (14) hindurchgedrückt und/oder hindurchgesogen wird, so dass das gefilterte Wasser (10) in Reinstwasser (5) und aufkonzentriertes Wasser (4) auftrennbar ist.

3. Vorrichtung, nach Anspruch 1 oder Anspruch 2,
**dadurch gekennzeichnet,**
**dass** die spiegelbildlich angeordnete zweite Filtereinheit (2), die in Strömungsrichtung nach der Umkehrosmoseeinheit (1) angeordnet ist, rückwärts zusätzlich zu dem aufkonzentrierten Wasser (4) noch mit zu reinigendem Wasser (3), gefiltertem Wasser (10), und/oder Reinstwasser (5) durchströmt wird.

4. Vorrichtung, nach einem der vorhergehenden Ansprüche,
**dadurch gekennzeichnet,**
**dass** die mindestens eine Umkehrosmoseeinheit (1) mindestens eine Osmosemembran (14) aufweist und die mindestens eine Osmosemembran (14) von einem Drucktank (24) umgeben ist.

5. Vorrichtung, nach einem der vorhergehenden Ansprüche,
**dadurch gekennzeichnet,**
**dass** die mindestens eine Umkehrosmoseeinheit (1) mindestens eine Osmosemembran (14) aufweist und zur Erzeugung einer turbulenten Strömung an der Osmosemembran (14) mindestens eine Umkehrosmoseeinheit (1) eine Pumpe (13) aufweist.

6. Vorrichtung, nach einem der vorhergehenden Ansprüche,
**dadurch gekennzeichnet,**
**dass** die mindestens eine Umkehrosmoseeinheit (1) mindestens eine Osmosemembran (14) aufweist und an mindestens einer Osmosemembran (14) zu reinigendes Wasser (3) und/oder durch mindestens einen Filter gefiltertes Wasser (10) mit einem Druck von mehr als 50 bar, insbesondere mehr als 80 bar, anliegt.

7. Vorrichtung, nach Anspruch 6,
**dadurch gekennzeichnet,**
**dass** das zu reinigende Wasser (3) und/oder das durch mindestens einen Filter gefilterte Wasser (10) mittels einer Pumpe (11) mit dem erforderlichen Druck anliegt.

8. Vorrichtung, nach einem der vorhergehenden Ansprüche,
**dadurch gekennzeichnet,**
**dass** eine Filtereinheit (2) aus mindestens einem Grob- (6), mindestens einem Feinfilter (7), mindestens einem Absolutfilter (8) und/oder mindestens einem Aktivkohlefilter (20) besteht.

9. Verfahren zur Aufbereitung von zu reinigendem Wasser (3), nämlich Süßwasser, Salzwasser oder Brackwasser, insbesondere zur Entsalzung von zu reinigendem Wasser (3), mit mindestens zwei Filtereinheiten (2) und eine Umkehrosmoseeinheit (1), wobei die Umkehrosmoseeinheit (1) mittig zwischen den zwei Filtereinheiten (2) platziert ist, und die Filtereinheiten spiegelbildlich an beiden Seiten er Umkehrosmoseeinheit (1) angeflanscht sind, wobei eine erste Filtereinheit (2) die zur Erzeugung von gefiltertem Wasser (10) dient, in Strömungsrichtung von dem zu reinigenden Waser (3) oder von einem anderen Filter gefilterten Wasser (10) durchströmt wird, wobei das gefilterte Wasser mittels der Umkehrosmoseeinheit (1) in aufkonzentriertes Wasser und Reinstwasser (5) auftrennbar ist,
**dadurch gekennzeichnet,**
**dass** die spiegelbildlich angeordnete zweite Filtereinheit (2), die in Strömungsrichtung nach der Umkehrosmoseeinheit (1) angeordnet ist, rückwärts von dem aufkonzentrierten Wasser (4) durchströmt wird und die Strömungsrichtung in der Umkehrosmoseeinheit (1) und in den Filtereinheiten umgekehrt wird, so dass die zweite Filtereinheit (2') durch Filterung des zu reinigenden Wassers (3) beladen wird und die erste Filtereinheit (2) frei gespült wird.

10. Verfahren, nach Anspruch 9,
**dadurch gekennzeichnet,**
**dass** in mindestens einer Umkehrosmoseeinheit (1), die mindestens eine Osmosemembran (14) aufweist, das durch die Filtereinheit (2) gefilterte Wasser (10) mittels mindestens einer Pumpe (11) mit hohem Druck durch die Osmosemembran (14) bzw. die Osmosemembranen (14) hindurchgedrückt und/oder hindurchgesogen wird, so dass das gefilterte Wasser (10) in Reinstwasser (5) und aufkonzentriertes Wasser (4) aufgetrennt wird.

11. Verfahren, nach Anspruch 9 oder Anspruch 10,
**dadurch gekennzeichnet,**
**dass** die spiegelbildlich angeordnete zweite Filtereinheit (2), die in Strömungsrichtung nach der Umkehrosmoseeinheit (1) angeordnet ist, rückwärts zusätzlich zu dem aufkonzentrierten Wasser (4) noch mit zu reinigendem Wasser (3), gefiltertem Wasser (10) und/oder Reinstwasser (5) durchströmt wird.

12. Verfahren, nach einem der Ansprüche 9 bis 11,
**dadurch gekennzeichnet,**
**dass** die mindestens eine Umkehrosmoseeinheit (1) mindestens eine Osmosemembran (14) aufweist und mittels einer Pumpe (13) eine turbulente Strömung an der Osmosemembran (14) mindestens einer Umkehrosmoseeinheit (1) erzeugt wird.

13. Verfahren, nach einem der Ansprüche 9 bis 12,
**dadurch gekennzeichnet,**
**dass** die mindestens eine Umkehrosmoseeinheit (1) mindestens eine Osmosemembran (14) aufweist und an einer Osmosemembran (14) das zu reinigende Wasser (3) und/oder durch einen anderen Filter gefilterten Wasser (10) mit einem Druck von mehr als 50 bar, insbesondere mehr als 80 bar, angelegt wird.

14. Verfahren, nach Anspruch 13,
**dadurch gekennzeichnet,**
**dass** das zu reinigende Wasser (3) und/oder durch einen anderen Filter gefilterten Wasser (10) mittels einer Pumpe (11) mit dem erforderlichen Druck angelegt wird oder die mindestens eine Umkehrosmoseeinheit (1) mindestens eine Osmosemembran (14) aufweist und die Osmosemembran (14) derart tief im Wasser bzw. im Meer angeordnet wird, dass der dort vorhandene Wasserdruck zum Hindurchtreten ausreicht.

15. Verfahren, nach einem der Ansprüche 9 bis 14,
**dadurch gekennzeichnet,**
**dass** eine Filtereinheit (2) eingesetzt wird, die aus mindestens einem Grob- (6), mindestens einem Feinfilter (7), mindestens einem Absolutfilter (8) und/oder mindestens einem Aktivkohlefilter (20) bestehen.

## Claims

1. A device for treating water (3) to be purified, more specifically fresh water, salt water, or brackish water, in particular for the purpose of desalinating water (3) to be purified, said device having at least two filtering units (2) and a reverse osmosis unit (1), wherein the reverse osmosis unit (1) is placed centrally between the two filtering units (2) and the filtering units are flange-mounted on either side of the reverse osmosis unit (1) in a mirror-inverted manner, wherein the water (3) to be purified or the water (10) that has been filtered by another filter passes, in the flow direction, through a first filtering unit (2) which serves for producing filtered water (10), wherein the filtered water may be separated into concentrated water (4) and ultrapure water (5) by means of the reverse osmosis unit (1),
**characterised in that**
the concentrated water (4) passes, in a backward direction, through the mirror-symmetrically disposed second filtering unit (2) which is arranged downstream of the reverse osmosis unit (1) when considered in the flow direction, and **in that** the flow direction in the reverse osmosis unit (1) and in the filtering units may be inverted, such that the second filtering unit (2') is charged by a filtering of the water (3) to be purified and the first filtering unit (2) is flushed clear.

2. The device as claimed in claim 1,
**characterised in that**
the at least one reverse osmosis unit (1) has at least one osmosis membrane (14), wherein the filtered water (10) that has been filtered by the filtering unit (2) is pressed and/or sucked through the osmosis membrane (14), or through the osmosis membranes (14), at a high pressure by means of at least one pump (11), such that the filtered water (10) may be separated into ultrapure water (5) and concentrated water (4).

3. The device as claimed in claim 1 or claim 2,
**characterised in that**
in addition to the concentrated water (4), also water (3) to be purified, filtered water (10) and/or ultrapure water (5) pass, in a backward direction, through the mirror-symmetrically disposed second filtering unit (2), which is arranged downstream of the reverse osmosis unit (1) when considered in the flow direction.

4. The device as claimed in any of the preceding claims,
**characterised in that**
the at least one reverse osmosis unit (1) has at least one osmosis membrane (14) and said at least one osmosis membrane (14) is surrounded by a pressure tank (24).

5. The device as claimed in any of the preceding claims,
**characterised in that**
the at least one reverse osmosis unit (1) has at least one osmosis membrane (14) and at least one reverse osmosis unit (1) has a pump (13) for the purpose of creating a turbulent flow at the osmosis membrane (14).

6. The device as claimed in any of the preceding claims,
**characterised in that**
the at least one reverse osmosis unit (1) has at least one osmosis membrane (14) and **in that** water (3) to be purified and/or water (10) that has been filtered by at least one filter is applied against at least one osmosis membrane (14) with a pressure of more than 50 bar, in particular of more than 80 bar.

7. The device as claimed in claim 6,
**characterised in that**
the water (3) to be purified and/or the water (10) filtered by at least one filter is applied with the required pressure by means of a pump (11).

8. The device as claimed in any of the preceding claims,
**characterised in that**
a filtering unit (2) consists of at least one coarse filter (6), at least one fine filter (7), at least one absolute filter (8), and/or at least one activated carbon filter (20).

9. A method of treating water (3) to be purified, more specifically fresh water, salt water, or brackish water, in particular for the purpose of desalinating water (3) to be purified, said method involving at least two filtering units (2) and a reverse osmosis unit (1), wherein the reverse osmosis unit (1) is placed centrally between the two filtering units (2) and the filtering units are flange-mounted on either side of the reverse osmosis unit (1) in a mirror-inverted manner, wherein the water (3) to be purified or the water (10) that has been filtered by another filter passing, in the flow direction, through a first filtering unit (2) which serves for producing filtered water (10), wherein the filtered water may be separated into concentrated water and ultrapure water (5) by means of the reverse osmosis unit (1),
**characterised in that**
the concentrated water (4) passes, in a backward direction, through the mirror-symmetrically disposed second filtering unit (2), which is arranged downstream of the reverse osmosis unit (1) when considered in the flow direction, and **in that** the flow direction in the reverse osmosis unit (1) and in the filtering units is inverted, such that the second filtering unit (2') is charged by a filtering of the water (3) to be purified and the first filtering unit (2) is flushed clear.

10. The method as claimed in claim 9,
**characterised in that**
in at least one reverse osmosis unit (1) which has at least one osmosis membrane (14), the filtered water (10) that has been filtered by the filtering unit (2) is pressed and/or sucked through the osmosis membrane (14), or through the osmosis membranes (14), at a high pressure by means of at least one pump (11), such that the filtered water (10) is separated into ultrapure water (5) and concentrated water (4).

11. The method as claimed in claim 9 or claim 10,
**characterised in that**
in addition to the concentrated water (4), also water (3) to be purified, filtered water (10) and/or ultrapure water (5) pass, in a backward direction, through the mirror-symmetrically disposed second filtering unit (2), which is arranged downstream of the reverse osmosis unit (1) when considered in the flow direction.

12. The method as claimed in any one of claims 9 to 11,
**characterised in that**
the at least one reverse osmosis unit (1) has at least one osmosis membrane (14) and a turbulent flow is created at the osmosis membrane (14) of at least one reverse osmosis unit (1) by means of a pump (13).

13. The method as claimed in any one of claims 9 to 12, **characterised in that**
the at least one reverse osmosis unit (1) has at least one osmosis membrane (14) and the water (3) to be purified and/or the water (10) that has been filtered by another filter is applied against an osmosis membrane (14) with a pressure of more than 50 bar, in particular of more than 80 bar.

14. The method as claimed in claim 13,
**characterised in that**
the water (3) to be purified and/or the water (10) that has been filtered by another filter is applied with the required pressure by means of a pump (11) or **in that** the at least one reverse osmosis unit (1) has at least one osmosis membrane (14) and said osmosis membrane (14) is disposed sufficiently deep in the water or in the sea such that the water pressure reigning at this depth is sufficient for the water to pass therethrough.

15. The method as claimed in any one of claims 9 to 14,
**characterised in that**
a filtering unit (2) is used that consists of at least one coarse filter (6), at least one fine filter (7), at least one absolute filter (8), and/or at least one activated carbon filter (20).

## Revendications

1. Dispositif destiné au traitement d'eau à purifier (3), à savoir d'eau douce, d'eau salée ou d'eau saumâtre, en particulier destiné au dessalement d'eau à purifier (3), pourvu d'au moins deux unités de filtration (2) et d'une unité d'osmose inverse (1), l'unité d'osmose inverse (1) étant placée de manière centrale entre les deux unités de filtration (2), et les unités de filtration étant fixées par bridage de manière symétrique sur les deux côtés de l'unité d'osmose inverse (1), une première unité de filtration (2) qui sert à la production d'eau filtrée (10) étant traversée, dans le sens d'écoulement, par l'eau à purifier (3) ou par de l'eau filtrée (10) ayant passée par un autre filtre, l'eau filtrée pouvant être séparée en eau concentrée (4) et en eau ultra-pure (5) au moyen de l'unité d'osmose inverse (1),
**caractérisé en ce que**
la deuxième unité de filtration (2) qui est disposée de manière symétrique et se situe, dans le sens d'écoulement, après l'unité d'osmose inverse (1) est traversée en sens inverse par l'eau concentrée (4) et **en ce que** le sens d'écoulement dans l'unité d'osmose inverse (1) et dans les unités de filtration peut être inversé de sorte que la deuxième unité de filtration (2') est chargée par filtration de l'eau à purifier (3) et que la première unité de filtration (2) est nettoyée par rinçage.

2. Dispositif selon la revendication 1,
**caractérisé en ce que**
ladite au moins une unité d'osmose inverse (1) présente au moins une membrane osmotique (14), l'eau filtrée (10) ayant passée par l'unité de filtration (2) étant poussée et/ou étant aspirée sous haute pression à travers la membrane osmotique (14) ou les membranes osmotiques (14) au moyen d'au moins une pompe (11) de sorte que l'eau filtrée (10) peut être séparée en eau ultra-pure (5) et en eau concentrée (4).

3. Dispositif selon la revendication 1 ou selon la revendication 2,
**caractérisé en ce que**
la deuxième unité de filtration (2) qui est disposée de manière symétrique et se situe, dans le sens d'écoulement, après l'unité d'osmose inverse (1) est traversée en sens inverse non seulement par de l'eau concentrée (4) mais aussi par de l'eau à purifier (3), de l'eau filtrée (10) et/ou de l'eau ultra-pure (5).

4. Dispositif selon l'une quelconque des revendications précédentes,
**caractérisé en ce que**
ladite au moins une unité d'osmose inverse (1) présente au moins une membrane osmotique (14) et que ladite au moins une membrane osmotique (14) est entourée d'un réservoir sous pression (24).

5. Dispositif selon l'une quelconque des revendications précédentes,
**caractérisé en ce que**
ladite au moins une unité d'osmose inverse (1) présente au moins une membrane osmotique (14) et **en ce qu'**au moins une unité d'osmose inverse (1) présente une pompe (13) en vue de créer un écoulement turbulent au niveau de la membrane osmotique (14).

6. Dispositif selon l'une quelconque des revendications précédentes,
**caractérisé en ce que**
ladite au moins une unité d'osmose inverse (1) présente au moins une membrane osmotique (14) et **en ce que** de l'eau à purifier (3) et/ou de l'eau filtrée (10) ayant passée par au moins un filtre est appliquée au niveau d'au moins une membrane osmotique (14) avec une pression supérieure à 50 bars, en particulier supérieure à 80 bars.

7. Dispositif selon la revendication 6,
**caractérisé en ce que**
l'eau à purifier (3) et/ou l'eau filtrée (10) ayant passée par au moins un filtre est appliquée avec la pression nécessaire au moyen d'une pompe (11).

8. Dispositif selon l'une quelconque des revendications précédentes,
**caractérisé en ce que**
une unité de filtration (2) est constituée d'au moins un filtre grossier (6), d'au moins un filtre fin (7), d'au moins un filtre absolu (8) et/ou d'au moins un filtre à charbon actif (20).

9. Procédé destiné au traitement d'eau à purifier (3), à savoir d'eau douce, d'eau salée ou d'eau saumâtre, en particulier destiné au dessalement d'eau à purifier (3), à l'aide d'au moins deux unités de filtration (2) et d'une unité d'osmose inverse (1), l'unité d'osmose inverse (1) étant placée de manière centrale entre les deux unités de filtration (2), et les unités de filtration étant fixées par bridage de manière symétrique sur les deux côtés de l'unité d'osmose inverse (1), une première unité de filtration (2) qui sert à la production d'eau filtrée (10) étant traversée, dans le sens d'écoulement, par l'eau à purifier (3) ou par de l'eau filtrée (10) ayant passée par un autre filtre, l'eau filtrée pouvant être séparée en eau concentrée et en eau ultra-pure (5) au moyen de l'unité d'osmose inverse (1),
**caractérisé en ce que**
la deuxième unité de filtration (2) qui est disposée de manière symétrique et se situe, dans le sens d'écoulement, après l'unité d'osmose inverse (1) est traversée en sens inverse par l'eau concentrée (4), et **en ce que** le sens d'écoulement dans l'unité d'osmose inverse (1) et dans les unités de filtration est inversé de sorte que la deuxième unité de filtration (2') est chargée par filtration de l'eau à purifier (3) et que la première unité de filtration (2) est nettoyée par rinçage.

10. Procédé selon la revendication 9,
**caractérisé en ce que**
dans au moins une unité d'osmose inverse (1) qui présente au moins une membrane osmotique (14), l'eau filtrée (10) ayant passée par l'unité de filtration (2) est poussée et/ou est aspirée sous haute pression à travers la membrane osmotique (14) ou les membranes osmotiques (14) au moyen d'au moins une pompe (11) de sorte que l'eau filtrée (10) est séparée en eau ultra-pure (5) et en eau concentrée (4).

11. Procédé selon la revendication 9 ou selon la revendication 10,
**caractérisé en ce que**
la deuxième unité de filtration (2) qui est disposée de manière symétrique et se situe, dans le sens d'écoulement, après l'unité d'osmose inverse (1), est traversée en sens inverse non seulement par de l'eau concentrée (4) mais aussi par de l'eau à purifier (3), de l'eau filtrée (10) et/ou de l'eau ultra-pure (5).

12. Procédé selon l'une quelconque des revendications 9 à 11,
**caractérisé en ce que**
ladite au moins une unité d'osmose inverse (1) présente au moins une membrane osmotique (14) et **en ce qu'**un écoulement turbulent est créé au niveau de la membrane osmotique (14) d'au moins une unité d'osmose inverse (1) au moyen d'une pompe (13).

13. Procédé selon l'une quelconque des revendications 9 à 12,
**caractérisé en ce que**
ladite au moins une unité d'osmose inverse (1) présente au moins une membrane osmotique (14) et **en ce que** l'eau à purifier (3) et/ou de l'eau filtrée (10) ayant passée par un autre filtre est appliquée au niveau d'une membrane osmotique (14) avec une pression supérieure à 50 bars, en particulier supérieure à 80 bars.

14. Procédé selon la revendication 13,
**caractérisé en ce que**
l'eau à purifier (3) et/ou de l'eau filtrée (10) ayant passée par un autre filtre est appliquée avec la pression nécessaire au moyen d'une pompe (11) ou **en ce que** ladite au moins une unité d'osmose inverse (1) présente au moins une membrane osmotique (14) et **en ce que** la membrane osmotique (14) est disposée dans l'eau ou dans la mer à une profondeur telle que la pression de l'eau à cet endroit est suffisante pour provoquer le passage de l'eau à travers celle-ci.

15. Procédé selon l'une quelconque des revendications 9 à 14,
**caractérisé en ce que**
l'unité de filtration (2) utilisée est constituée d'au moins un filtre grossier (6), d'au moins un filtre fin (7), d'au moins un filtre absolu (8) et/ou d'au moins un filtre à charbon actif (20).
